# EUROPEAN PATENT APPLICATION

(11) **EP 2 447 298 A1**
(43) Date of publication of application: **02.05.2012**
(21) Application number: 12152792.3
(22) Date of filing: 22.12.2009
(51) Int. Cl.: C08G 63/78

(54) **Process for the manufacture of polycyclohexane, dimethylene, terephthalate copolymers from polyethylene terephthalate and compositions and articles thereof**

(30) Priority: 30.12.2008 US 346207
(62) Divisional of application: 09795661.9
(71) Applicant: SABIC Innovative Plastics B.V., 4612 PX Bergen Op Zoom (NL)
(72) Inventor: Kannan, Ganesh, Evansville, IN Indiana 47712 (US)
(74) Representative: Carpintero Lopez, Francisco

(57) **Abstract**

A process comprises heating at a first temperature under an inert atmosphere and at first pressure of at least 101 kPa a cyclohexanedimethanol, and a poluethylene terephthalate component selected from the group consisting of polyethylene terephthalate and polyethylene terephthalate copolymers, to form a molten mixture; and heating the molten mixture with agitation at a second temperature higher than the first temperature and a second, subatmospheric pressure for a time and under conditions effective to form a modified polycyclohexane dimethylene terephthalate copolymer comprising at least one residue derived from the polyethylene terephthalate component.

## Description

### BACKGROUND OF THE INVENTION

This disclosure relates to a process for the manufacture of polycyclohexane dimethylene terephthalate from polyethylene terephthalate, and compositions and articles thereof.

Polycyclohexane dimethylene terephthalate (PCT) is a crystalline thermoplastic polymer with inherently high heat performance (Tm = 295°C). It is currently used for lead free soldering, medical, food, and automotive applications. Although useful to many customers, conventional PCT molding compositions generally are not made from recycled sources of PCT due to the lack of availability of large post-consumer or post-industrial supplies of PCT scrap materials. Polyethylene terephthalate (PET), unlike PCT, is made in much larger quantities and is more easily recovered from consumer wastes.

With increasing demand for conserving non-renewable resources and more effectively recycling underutilized scrap PET, improved and less costly eco-friendly processes for deriving PCT from scrap PET materials are sought, in particular if the resulting derived PCT compositions possess desirable physical properties such as tensile and impact strength, and thermal properties.

### BRIEF DESCRIPTION OF THE INVENTION

As described herein, a process comprises heating at a first temperature under an inert atmosphere and at a first pressure of at least 101 kPa cyclohexanedimethanol and a polyethylene terephthalate component selected from the group consisting of polyethylene terephthalate and polyethylene terephthalate copolymers, to form a molten mixture comprising a component selected from the group consisting of oligomers containing ethylene terephthalate groups, oligomers containing ethylene isophthalate groups, oligomers containing diethylene terephthalate groups, oligomers containing diethylene isophthalate groups, oligomers containing cyclohexanedimethylene terephthalate groups, oligomers containing cyclohexanedimethylene isophthalate groups, covalently bonded oligomeric moieties containing at least two of the foregoing groups, cyclohexanedimethanol, ethylene glycol, and combinations thereof; and heating the molten mixture with agitation at a second temperature higher than the first temperature and a second, subatmospheric pressure for a time and under conditions effective to form a modified polycyclohexane dimethylene terephthalate copolymer comprising at least one residue derived from the polyethylene terephthalate component.

Compositions formed by the process, and articles comprising the compositions, are also disclosed.

These and other features, aspects, and advantages of the present invention will become better understood with reference to the following description and appended claims.

### DETAILED DESCRIPTION OF THE INVENTION

The inventors have discovered that polyethylene terephthalate (PET) can efficiently be converted to what is referred to herein as a modified polycyclohexane dimethylene terephthalate (PCT). The modified PCT compositions have physical properties suitable for commercial molding applications. Unlike conventional molding compositions containing virgin PCT (PCT prepared from monomers), the modified PCT used in the molded articles contains a polyethylene terephthalate residue, e.g., materials such as ethylene glycol and isophthalic acid groups (components that are not present in "virgin," monomer-based PCT). In some instances, the modified PCT molding compositions exhibit improved flow and mechanical properties compared to molding compositions comprising virgin PCT. The process provides a valuable way to effectively recycle post-consumer or post-industrial streams of scrap PET for utilization in PCT molding applications. Further, the process can aid in the conservation of non-renewable resources and reduce the formation of greenhouse gases, e.g., CO₂.

As used herein the singular forms "a," "an," and "the" include plural referents. The term "combination" is inclusive of blends, mixtures, alloys, reaction products, and the like. Unless defined otherwise, technical and scientific terms used herein have the same meaning as is commonly understood by one of skill. Compounds are described using standard nomenclature. The term "and a combination thereof" is inclusive of a combination of one or more of the named components, optionally with one or more other components not specifically named that have essentially the same function.

The term "random copolymer," as used in this application refers to a copolymer that includes macromolecules in which the probability of finding a given monomeric unit at any given site in the chain is independent of the nature of the adjacent units.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount more than 0, and up to and including the higher named amount.

All ASTM tests and data are from the 2003 edition of the Annual Book of ASTM Standards unless otherwise indicated.

With respect to the terms "terephthalic acid group," "isophthalic acid group," "ethylene glycol group," "butanediol group," "cyclohexanedimethanol group," and "diethylene glycol group" being used to indicate, for example, the weight % of the group in a molecule, the term "isophthalic acid group" means the group or residue of an isophthalic acid having the formula (-O(CO)C₆H₄(CO)-), the term "terephthalic acid group(s)" means the group or residue of terephthalic acid having the formula (-O(CO)C₆H₄(CO)-), the term "diethylene glycol group means the group or residue of diethylene glycol having the formula (-O(C₂H₄)O(C₂H₄)-), the term "butanediol group" means the group or residue of butanediol having the formula (-O(C₄H₈)-), the term "cyclohexanedimethanol group" means the group or residue of cyclohexanedimethanol having the formula (-O(C₈H₁₄)-), and the term "ethylene glycol group" means the group or residue of ethylene glycol having the formula (-O(C₂H₄)-).

In general, modified PCT copolymer (also referred to as PET-modified PCT, or PET-derived PCT) is made by a process wherein the PET component is depolymerized in the presence of 1,4-cyclohexanedimethanol followed by polymerization of the depolymerized PET component with 1,4-cyclohexanedimethanol and an optional catalyst. While 1,4-cyclohexanedimethanol is the most commonly available form of cyclohexanedimethanol, it is to be understood that the process, compositions, and articles described herein also encompass 1,2-cyclohexanedimethanol and 1,3-cyclohexanedimethanol. The term cyclohexanediniethanol ("CHDM") will be used to mean all isomeric forms of cyclohexanedimethanol, with 1,4-cyclohexanedimethanol being preferred. Likewise, cyclohexanedimethylene refers to divalent 1,2-cyclohexanedimethylene, 1,3-cyclohexanedianethylene, and 1,4-cyclohexanedimethylene, with 1,4-cyclohexanedimethylene being preferred, It also includes any combination of cis and trans forms of each of cyclohexanedimethanol species discussed above. A typical ratio or trans to cis form is 70:30 and other ratios are possible.

The PET component from which the modified PCT copolymers is made can be in a variety of forms. Generally, the PET component includes recycled (scrap) PET in flake, powder/chip, film, or pellet form. Before use, the PET is generally processed to remove impurities such as paper, adhesives, polyolefin, e.g., polypropylene, polyvinyl chloride (PVC), nylon, polylactic acid (an aliphatic polyester), and other contaminants. In addition, the PET component can include PET that is not waste in flake, chip, or pellet form. As such, PET that would ordinarily be deposited in landfills can now be used productively and effectively. In one embodiment, the PET component can also include other polyesters and/or polyester copolymers derived from aromatic dicarboxylic acids. Examples of such materials include polyalkylene terephtalates such as polyethylene terephthalate, polycyclohexane dimethylene terephthalate, copolyesters of terephthalate esters with comonomers containing cyclohexanedimethanol and ethylene glycol, copolyesters of terephthalic acid with comonomers containing cyclohexanedimethanol and ethylene glycol, polybutylene terephthalate, polyxylylene terephthalate, polydianol terephthalates, polytrimethylene terephthalate, polyester naphthalates, and combinations thereof.

In one specific method for the manufacture of the modified PCT copolymer, the PET component is (a) depolymerized in the presence of CHDM, and an optional catalyst. The depolymerization step provides a molten mixture of oligomers containing ethylene terephthalate groups, oligomers containing ethylene isophthalate groups, oligomers containing diethylene glycol terephthalate groups, oligomers containing diethylene glycol isophthalate groups, oligomers containing cyclohexanedimethylene terephthalate groups, oligomers containing cyclohexanedimethylene isophthalate groups, and covalently bonded oligomeric moieties containing at least two of the foregoing groups. Suitable conditions for effecting the depolymerization include a pressure that is at least atmospheric pressure; and a first temperature ranging from 210°C to 280°C. The depolymerization mixture is agitated under an inert atmosphere.

In a subsequent step (b), the temperature of the molten mixture is raised to remove at least one volatile material at a second temperature, and the pressure is decreased to a second subatmospheric pressure, specifically less than 101 kPa, to form the modified PCT copolymer, comprising polyester units selected from the following formulas (1), (2), (3), (4): 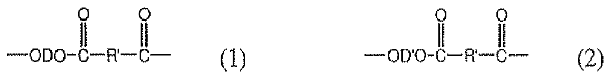 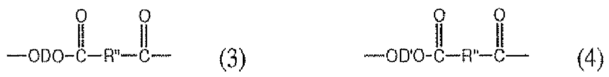 wherein D is a 1,4-cyclohexanedimethylene (-(C₈H₁₄)-); D' is ethylene (-(C₂H₄)-); R' is terephthalylene (-1,4-(C₆H₄)-); and R" is an isophthalylene (-1,3-(C₆H₄)-).

The cyclohexanedimethanol can be continuously refluxed back into the reactor during the depolymerization. In one embodiment, cyclohexanedimethanol is refluxed back into the reactor during the depolymerization (step(a)). In another embodiment, excess cyclohexanedimethanol and ethylene glycol are removed during the polymerization (step(b)).

The PET component and the cyclohexanedimethanol component are generally combined under an inert atmosphere and first pressure of at least 99 kPa to 101 kPa, more particularly at least 101 kPa (atmospheric pressure).

The temperature at which the PET component and the cyclohexanedimethanol are combined and reacted is sufficient to promote depolymerization of the PET component into components such as polyethylene terephthalate and polycyclohexane dimethylene terephthalate oligomers, cyclohexanedimethanol, and ethylene glycol. More particularly, the PET component is depolymerized into oligomers containing ethylene terephthalate groups, oligomers containing ethylene isophthalate groups, oligomers containing diethylene glycol terephthalate groups, oligomers containing diethylene glycol isophthalate groups, oligomers containing cyclohexanedimethylene terephthalate groups, oligomers containing cyclohexanedimethylene isophthalate groups, and covalently bonded oligomeric moieties containing at least two of the foregoing moieties. The temperature at which the PET component and the cyclohexanedimethanol component are combined is generally from 210°C to 280°C.

The cyclohexanedimethanol is generally used in excess amount relative to the PET component. In one embodiment, cyclohexanedimethanol is used in a molar excess amount ranging from 1.05 to 2 molar excess, based on the moles of ethylene terephthalate repeating unit.

During the initial stage of the process, at the first temperature, when the PET component and the cyclohexanedimethanol are combined and reacted (step (a)), the PET component depolymerizes into a molten mixture. As described above, the molten mixture contains at least polyethylene terephthalate and polycyclohexane dimethylene terephthalate oligomers, cyclohexanedimethanol, and ethylene glycol. The cyclohexanedimethanol and ethylene glycol are generally recirculated, or refluxed back into the reactor, during heating at the first temperature. In one embodiment, the PET component can be further depolymerized with ethylene glycol.

The duration of the depolymerization step is at least 30 minutes, depending on factors such as the equipment used, production needs, desired final properties, and the like. In one embodiment, the depolymerization step is carried out for 30 min to 2 hours. In another embodiment, the depolymerization step is carried out in from 2 to 5 hours.

The process further includes the step of polymerizing the molten mixture at subatmospheric pressure and at an increased second temperature of at least 280°C, more particularly 280°C to 310°C, thereby forming the modified PCT copolymer derived from the PET component (step (b)).

Generally, the molten mixture is subjected to a second pressure lower than the first pressure. In one embodiment, the first pressure is reduced to a second pressure of 99 kPa to 0.013 kPa in a continuous manner. In another embodiment, the first pressure is reduced to a second pressure of 1.33 kPa to 0.013 kPa in a continuous fashion. More particularly the second pressure is less than 0.3 kPa absolute. Advantageously, the molten mixture can be placed under subatmospheric conditions without isolation and dissolution of any material from the molten mixture. The avoidance of isolating the molten mixture greatly enhances the utility of the process. The polymerization is conducted with agitation and under an inert atmosphere.

The temperature at which the molten mixture is placed under subatmospheric conditions is sufficiently high to promote polymerization of the polyethylene terephthalate oligomers and polycyclohexane dimethylene terephthalate oligomers, cyclohexanedimethanol, and ethylene glycol.

During the step when the molten mixture is placed under subatmospheric conditions and the temperature is increased, excess cyclohexanedimethanol, ethylene glycol, or a combination thereof can be removed from the reactor and oligomers are allowed to build in molecular weight. Agitation can be continuously provided to facilitate the removal of the low boiling components. After sufficient molecular weight is obtained, the resulting molten PCT polymer is dropped from the reactor, cooled, stranded, and chopped into pellets.

The duration of the step in which the molten mixture polymerizes from polyethylene terephthalate and polycyclohexane dimethylene terephthalate oligomers, cyclohexanedimethanol, and ethylene glycol can vary, depending on factors such as the equipment used, production needs, desired final properties, and the like. In one embodiment, the polymerization is carried out from 5 minutes to 1 hour. In another embodiment, the polymerization step is carried out from 2 to 5 hours. The resulting mixture comprises modified PCT and at least one polyethylene terephthalate component residue.

Both steps of the process can be carried out in the same reactor. In one embodiment, however, the process is carried out in at least two separate reactors, where step (a) is carried out in a first reactor and when the molten mixture has formed, the molten mixture is placed in a second reactor and step (b) is carried out. In another embodiment, the process can be carried out in more than two reactors. In another embodiment, the process can be carried out in a continuous series of reactors.

A catalyst can be used to facilitate the reaction. Exemplary catalysts include antimony compounds, tin compounds, titanium compounds, combinations thereof as well as many other metal catalysts and combinations of metal catalysts that have been disclosed in the literature. The amount of the catalyst will vary depending on the specific reaction components and conditions, and can be from 10 to 5000 ppm, or more. The catalyst component is generally added in step (a), during the initial combining of the PET component, the cyclohexanedimethanol, and the ionic monomer. In another embodiment, the catalyst component can be added to the molten mixture that forms after the PET component and the cyclohexanedimethanol are combined and reacted. The catalyst can also be added during both the depolymerization and polymerization steps.

The process for making the modified copolymer is preferably carried out under agitative conditions. The term "agitative conditions" or "agitation" refers to subjecting the PET component, the at least one second polymer, and the cyclohexanedimethanol to conditions that involve physically mixing the PET component and cyclohexanedimethanol and that promote the depolymerization of the PET in step (a), and/or subjecting the molten mixture to conditions that involve physically mixing the molten mixture to promote polymerization to form the modified PCT from polyethylene terephthalate oligomers, polycyclohexane dimethylene terephthalate oligomers, cyclohexanedimethanol, and ethylene glycol in step (b). The physical mixing can be accomplished by methods known in the art. In one embodiment, a mixer containing rotating shaft and blades that are perpendicular to the shaft is used.

In another method for the manufacture the modified PCT copolymer, a three-step process is used. In this process, the PET component is (a) depolymerized in the presence of the at least one second polymer, ethylene glycol, propylene glycol, butanediol, or a combination thereof, under conditions effective to provide a first molten mixture of oligomers containing ethylene terephthalate moieties, oligomers containing ethylene isophthalate groups, oligomers containing diethylene glycol terephthalate groups, oligomers containing diethylene glycol isophthalate groups, oligomers containing trimethylene terephthalate groups, oligomers containing tributylene isophthalate groups, oligomers containing butylene terephthalate groups, oligomers containing butylene isophthalate groups and covalently bonded oligomeric groups containing at least two of the foregoing groups. Suitable conditions for effecting the depolymerization include a pressure that is at least atmospheric pressure; a temperature ranging from 210°C to 280°C; and an inert atmosphere. The depolymerization of the PET component can be carried out for various times. In one embodiment, the depolymerization is carried out for at least 30 minutes.

In step (b) of the three-step process, 1,4-cyclohexanedimethanol is added to the first molten mixture under conditions that are effective to form a second molten mixture containing a components selected from the group consisting of oligomers containing ethylene terephthalate groups, oligomers containing ethylene isophthalate groups, oligomers containing diethylene terephthalate groups, oligomers containing diethylene isophthalate groups, oligomers containing trimethylene terephthalate groups, oligomers containing trimethylene isophthalate groups, oligomers containing butylene terephtalate groups, oligomers containing butylene isophthalate groups, oligomers containing cyclohexanedimethylene terephtalate groups, oligomers containing cyclohexanedimethylene isophthalate groups, covalently bonded oligomeric moieties containing at least two of the foregoing groups, and combinations thereof. Suitable conditions for forming the molten mixture are in a reactor in the presence of a catalyst component at a temperature ranging from 230°C to 280°C.

In a subsequent step (c) of the three-step process, the temperature of the molten mixture is raised, and the pressure is decreased to subatmospheric pressure, to form the modified PCT copolymer, comprising ester units selected from the following formulas (1), (2), (3), (4), (5), (6), (7), and (8): 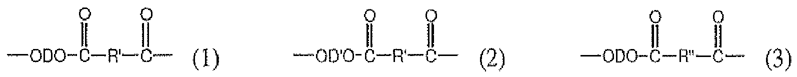 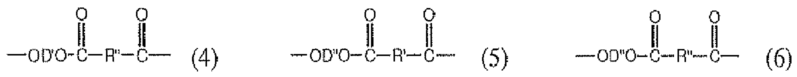 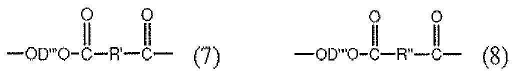 wherein D is cyclohexanedimethylene (-(C₈H₁₄)-); D' is ethylene (-(C₂H₄)-); D'' is 1,2-trimethylene, 1,3-trimethylene, or a combination thereof, D''' is 1,4-tetramethylene, 1,2-tetramethylene, 1,3-tetramethylene, or a combination thereof; R' is terephthalylene (-1,4-(C₆H₄)-); and R" is isophthalylene (-1,3-(C₆H₄)-). A mixture comprising two or more of the foregoing ester units can be present.

It will be appreciated that the components in the first and second molten mixtures can vary, depending on the diol used in the depolymerization step (a) of the three-step process. When the PET component is depolymerized with ethylene glycol, the first molten mixture contains oligomers containing ethylene terephthalate groups, oligomers containing ethylene isophthalate groups, oligomers containing diethylene terephthalate groups, oligomers containing diethylene isophthalate groups, covalently bonded oligomeric moieties containing at least two of the foregoing groups, ethylene glycol, and combinations thereof. When the PET component is depolymerized with propylene glycol, the first molten mixture contains oligomers containing ethylene terephthalate groups, oligomers containing ethylene isophthalate groups, oligomers containing diethylene glycol terephthalate groups, oligomers containing diethylene glycol isophthalate groups, oligomers containing trimethylene terephthalate groups, oligomers containing trimethylene isophthalate groups, oligomers containing butylene terephthalate groups, oligomers containing butylene isophthalate groups and covalently bonded oligomeric moieties containing at least two of the foregoing groups, ethylene glycol, propylene glycol, butanediol and combinations thereof. As used herein, "propylene glycol" can be either 1,3- or 1,2-trimethylene glycol, or a combination thereof, and "butanediol" is preferably 1,4-butane diol, or can also be 1,4- 1,3-, 1,2-, or 2,3-butane diol, or a combination thereof.

The diol component (ethylene glycol, propylene glycol, butanediol and combinations thereof) can be present in step (a) of this three-step embodiment in a molar amount that is at least 25%, or alternatively at least 50% of the amount of ethylene glycol moieties present in the PET component.

The compounds used in the two-step or three-step process can be reused and/or collected as the process proceeds. In one embodiment, the ethylene glycol, propylene glycol, butanediol or combination thereof and the cyclohexanedimethanol are removed and collected in a vessel in step (b). In another embodiment, in step (b), cyclohexanedimethanol is refluxed back into the reactor and excess cyclohexanedimethanol, ethylene glycol, propylene glycol, butanediol, or combinations thereof is removed. The duration of step (b) can also vary. Step (b) is conducted for a sufficient period of time to reduce at least 65 % of the ethylene glycol from the second molten mixture. In one embodiment, step (b) lasts at least 45 minutes. The pressure at which step (b) is carried out can vary. In one embodiment, step (b) is carried out in atmospheric conditions. In another embodiment, step (b) is carried out in subatmospheric conditions. Different combinations are possible. In one embodiment, step (b) is carried out with excess cyclohexanedimethanol and at a pressure from 30 kPa to 150 kPa (300 to 1500 mbar) absolute. The cyclohexanedimethanol used during step (b) can be added in a molar amount that is in excess, e.g., at least 1.05 times molar excess, relative to the molar amount of cyclohexanedimethanol moieties incorporated into the modified PCT copolymer obtained in step (c). In another embodiment, cyclohexanedimethanol is used in a molar excess amount from 1.05 to 5, and more specifically 1.05 to 2.

Step (c) of the three-step process can also be carried out with modifications, depending on the application. In one embodiment, for instance, a component selected from the group of excess cyclohexanedimethanol, ethylene glycol, propylene glycol, butanediol or a combination thereof is removed during step (c). The pressure at which step (c) is carried out can also vary. In one embodiment, step (c) is carried out at a pressure that of 99 kPa to 0.013 kPa.

The three-step process can be carried out in the same reactor. Alternatively, the three-step process can be carried out in at least two reactors.

A solid-state polymerization step can optionally be used in either of the foregoing processes. The solid-state polymerization generally involves subjecting the modified PCT copolymer formed from the molten mixture to an inert atmosphere or subatmospheric pressure and heating to a temperature for a sufficient period of time to build the molecular weight of the modified PCT copolymer. Generally, the temperature to which the modified PCT copolymer is heated is below the melting point of the modified PCT copolymer, e.g., from 5°C to 60°C below the melting point of the modified PCT copolymer. In one embodiment, such a temperature can range from 220°C to 285°C. Suitable periods of time during which the solid-state polymerization occurs may range from 2 to 20 hours, depending on the reaction components, conditions, and equipment used. The solid-state polymerization is generally carried out under tumultuous conditions sufficient to promote further polymerization of the modified PCT copolymer to a suitable molecular weight. Such tumultuous conditions may be created by subjecting the modified PCT copolymer to tumbling, the pumping of inert gas into the system to promote fluidization of polymer particle, e.g., pellets, chips, flakes, powder, and the like. The solid-state polymerization can be carried out at atmospheric pressure and/or under reduced pressure, e.g. from 101 kPa to 0.013 kPa (1 atmosphere to 0.13 mbar).

The modified PCT copolymer formed by the above-described methods comprises polyester units having at least one residue that is derived from a PET component. The residue derived from the PET component can be selected from the group consisting of ethylene glycol residues, diethylene glycol residues, isophthalic acid residues, antimony-containing compounds, germanium-containing compounds, titanium-containing compounds, cobalt-containing compounds, tin-containing compounds, aluminum-containing compounds, aluminum, aluminum salts, 1,3-cyclohexanedimethanol isomers, 1,4-cyclohexanedimethanol isomers (including cis-1,3-cyclohexanedimethanol, cis-1,4-cyclohexanedimethanol, trans-1,3-cyclohexanedimethanol, and trans-1,4-cyclohexanedimethanol, alkali salts, alkaline earth metal salts, including calcium, magnesium, sodium and potassium salts, phosphorous-containing compounds and anions, sulfur-containing compounds and anions, naphthalene dicarboxylic acids, and combinations thereof.

Depending on factors such as whether polyethylene terephthalate or polyethylene terephthalate copolymers are used, the residue derived from a PET component can include various combinations. In one embodiment, for instance, the residue includes mixtures of ethylene glycol and diethylene glycol. In another embodiment, the residue includes ethylene glycol, diethylene glycol, isophthalic acid, or combinations thereof. In another embodiment, at least one polyethylene terephthalate residue includes the cis isomer of 1,3-cyclohexanedimethanol, the cis isomer of 1,4-cyclohexanedimethanol, the trans isomer of 1,3-cyclohexanedimethanol, the trans isomer of 1,4-cyclohexanedimethanol, or combinations thereof. In another embodiment, the residue can be a mixture of ethylene glycol, diethylene glycol, isophthalic acid residues, the cis isomer of a cyclohexanedimethanol, the trans isomer of a cyclohexanedimethanol, and combinations thereof. In one embodiment, the residue derived from polyethylene terephthalate includes ethylene glycol, diethylene glycol, cobalt-containing compounds, antimony-containing compounds, isophthalic acid groups, or combinations thereof.

The amount of the ethylene glycol groups (i.e., residues), diethylene glycol groups, and the isophthalic groups in the polymeric backbone of the modified PCT copolymer can vary, and can contain, for example, isophthalic acid groups in an amount that is at least 0.1 mole %, specifically from 0 or 0.1 to 10 mole % (0 or 0.07 to 7 weight percent (wt.%)S). The modified PCT copolymer can contain ethylene glycol in an amount that is greater than 0 mole %, at least 0.1 mole % and can range from 0.1 to 10 mole % (0.02 to 2 wt.%). In another embodiment, the modified PCT copolymer has an ethylene glycol content that is greater than 0 wt.%, greater than 0.2wt.%, or alternatively greater than 1 wt.% and less than 10 wt.%, based on total weight of the copolymer. The modified PCT copolymer can also contain diethylene glycol in an amount from 0.1 to 10 mole % (0.04 to 4 wt.%). The amount of the cyclohexanedimethanol groups is generally about 98 mole % and can vary from 95 to 99.8 mole % in some embodiments. The amount of the terephthalic acid groups is generally about 98 mole % and can vary from 90 to 99.9 mole % in some embodiments. More particularly, the polyethylene terephthalate component residue is selected from the group consisting of ethylene glycol groups and diethylene glycol group; and the polyethylene terephthalate component residue is in an amount ranging from 0.1. to 10 mole %, based on 100 mole % of glycol in the modified polycyclohexanedimethylene terephthalate copolymer. The polyethylene terephthalate component residue can further comprise isophthalic acid groups in an amount ranging from 0 to 10 mole%, based on 100 mole% of acid functionality in the modified polycyclohexane dimethylene terephthalate random copolymer.

Unless otherwise specified, all molar amounts of the isophthalic acid groups and/or terephthalic acid groups are based on the total moles of acid functionality (diacids/diesters) in the composition. Unless otherwise specified, all molar amounts of the cyclohexanedimethanol, ethylene glycol, and diethylene glycol groups are based on the total moles of diol in the composition. The weight percent measurements stated above are based on the way terephthalic acid groups, isophthalic acid groups, ethylene glycol groups, and diethylene glycol groups have been defined herein.

The total amount of the polyethylene terephthalate residue in the modified PCT copolymer can vary. For instance, the total amount of the residue can be from 1.8 to 2.5 wt.%, or from 0.5 to 2 wt.%, or from 1 to 4 wt.%. The ethylene glycol, diethylene glycol, and cyclohexanedimethanol groups can be individually or in combination present in an amount from 0.1 to 10 mole %, based on 100 mole % of glycol of the modified PBT copolymer. The isophthalic acid groups can be present in an amount from 0.1 to 10 mole %, based on 100 mole % of diacid/diester in the modified PCT copolymer.

The total amount of inorganic residues derived from the PET component can be present in amounts from more than 0 parts per million (ppm), up to 1000 ppm, based on parts by weight of the modified PCT copolymer. Examples of such inorganic residues include of antimony-containing compounds, germanium-containing compounds, titanium-containing compounds, cobalt-containing compounds, tin containing compounds, aluminium-containing compounds, aluminum, aluminum salts, alkaline earth metal salts, alkali salts, including calcium, magnesium, sodium and potassium salts, phosphorous-containing compounds and anions, sulfur-containing compounds and anions, and combinations thereof. In another embodiment, the amounts of inorganic residues can be from 250 to 1000 ppm, specifically from 500 to 1000 ppm.

The physical properties of the modified PCT copolymer can vary, depending on factors such as the performance properties that are required, the equipment used, process parameters, and the like. The molecular weight of the modified PCT copolymer can be generally at least 3,000 g/mol, specifically from 10,000 to 40,000 g/mol, more specifically from 15,000 to 30,000 g/mol.

The intrinsic viscosity (IV) of the modified PCT can be at least 0.4 dUg, specifically from 0.5 to 1.3 dL/g, more specifically from 0.4 to 1.2 dL/g. All intrinsic viscosities in this application refer to those viscosities measured in a solution of 60 wt.% phenol and 40 wt.% 1,1,2,2-tetrachloroethane at 25°C.

The modified PCT copolymer has a melting temperature (Tm), measured by differential scanning calorimetry (DSC) in accordance with ASTM E1356, of at least 280°C. In another embodiment, the modified PCT copolymer has a melting temperature of from 280 °C to 294 °C. The modified PCT copolymer has a crystallization temperature (Tc), measured in accordance with ASTM D3418, of from 225 °C to 255 °C.

Compositions formed by the above described processes can be used in molding compositions. The molding compositions comprising the modified PCT copolymer have at least one residue derived from a polyethylene terephthalate component. Shaped articles, particularly extruded or injection molded articles, can be prepared from the molding compositions.

The modified PCT copolymer can be used alone, e.g., as a molding composition, or in combination with a wide variety of other thermoplastic polymers, for example other polyesters, polyolefins (e.g., polyethylenes and polypropylenes), polycarbonates (e.g., polycarbonates derived from bisphenol A), polyimides, polyetherimides, polyamides, and the like.

The compositions formed by the above described processes, or the molding compositions comprising a modified PCT, can include a catalyst quencher to inhibit further transesterification. Exemplary quenchers include a solution of 45 % phosphorous acid in water. Other examples of quenchers include phosphoric acid, transition metal phosphates, and other non-acidic species. Specific examples of quenchers include zinc phosphate, monozinc phosphate, calcium phosphate, phosphoric acid, phosphorous acid, and combinations thereof. The effective quantities of quenching agents are well known in the literature. An effective amount will ordinarily be from 50 to 500 ppm, or more. In one embodiment, an effective amount ranges from 1 to 5000 ppm. Quenchers will be particularly useful in molding compositions containing the modified polycyclohexane dimethylene terephthalate random copolymer, a second polymer component, and an impact modifier.

The molding composition comprising the modified PCT, and articles thereof, can also include an impact modifier, generally a rubbery material, which when used in suitable amounts, imparts energy absorbing properties to the composition. Exemplary rubbery impact modifiers include (a) methacrylate-butadiene-styrenes, (b) acrylate elastomers, (c) acrylonitrile-styrene-acrylates , (d) high rubber graft acrylonitrile-butadiene-styrenes, (e) acrylate-olefin copolymers, (f) polyolefin modifiers, or (g) silicone-acrylic modifiers (e.g., METABLEN^{™} S made by Mitsubishi Rayon). In one embodiment, the impact modifier is selected from the group consisting of methacrylate-butadiene-styrenes, acrylate elastomers, acrylonitrile-styrene-acrylate rubbers, high rubber graft acrylonitrile-butadiene-styrenes, silicone-acrylic modifiers, and combinations thereof. Other impact modifiers are the following materials, or blends of two or more of these materials: (1) PARALOID EXL3300, which is butyl acrylate-methyl methacrylate core-shell rubber; (2) ASA-HRG, which is acrylonitrile-styrene-butyl acrylate copolymer; (3) AES, which is acrylonitrile-styrene-EPDM copolymer, where EPDM is ethylene-propylene non conjugated diene elastomer; (4) LOTADER AX8900, which is ethylene-methacrylate-glycidylmethacrylate copolymer with a methacrylate content of around 8%.

The amount of the impact modifier is generally at least 1 wt.% based on the total weight of the modified PCT copolymer composition. In one embodiment, the amount of the impact modifier ranges from 1 wt.% to 50 wt.% based on the total weight of the modified PCT copolymer composition. In another embodiment, the amount of the impact modifier ranges from 5 wt.% to 25 wt.% based on the total weight of the modified PCT copolymer composition.

In addition to quenchers and impact modifiers, the molding compositions comprising the modified PCT, and articles thereof, can also include other additives, such as fillers, reinforcing agents, flame retardants, heat stabilizers, quenchers, mold release agents, polytetrafluoroethylene, polytetrafluoroethylene-poly(styrene-co- acrylonitrile) mixtures, and combinations thereof. More particularly, a molding composition can further contain a UV absorber. Exemplary UV absorbers include, for example salicylic acid UV absorbers, benzophenone UV absorbers, benzotriazole UV absorbers, cyanoacrylate UV absorbers, and mixtures thereof. Heat stabilizers include, but are not limited to, phenol stabilizers, organic thioether stabilizers, organic phosphite stabilizers, hindered amine stabilizers, epoxy stabilizers, and mixtures thereof.

One method of forming a molding composition comprises melt blending the components of any of the compositions comprising the modified PCT. A method of forming an article comprises shaping by extruding or molding the melt blended composition to form the article. A method of making thermoformed articles comprises thermoforming any of the compositions comprising the modified PCT to form the thermoformed article.

The molding compositions based on modified PCT can function comparably to those based on conventionally prepared PCT, despite using a structurally different material containing isophthalic groups and ethylene glycol groups. Since the molding compositions do not require the conventionally prepared PCT, the invention increases demand for the use of PET and thereby reduces the need to dispose PET scrap in landfills or by incineration.

Further, the process for making the PET-derived random, modified PCT copolymers used in the compositions can advantageously substantially reduce carbon dioxide emissions and solid waste. Because the PET-derived polyester random modified PCT copolymers made by the inventive process are made from scrap PET and not monomers, the process significantly reduces the amount of carbon dioxide emissions and solid waste. Carbon waste reduction (or crude oil savings) occurs because the carbon that constitutes the dimethyl terephthalate or terephthalic acid ordinarily used to make polyesters is not used, rather a PET component, e.g., polyester scrap, is replaced. The process to make DMT or TPA from crude oil is highly energy intensive and as a result, substantial emissions of CO2 to the atmosphere occur from burning of non-renewable energy sources. By not using DMT or TPA to make the modified PCT, carbon dioxide emissions savings are obtained. In one embodiment, the process for making modified PCT can eliminate at least 0.8kg of CO₂ emissions for every kilogram of modified PCT made with the process, as compared to a process that makes virgin PCT homopolymers from monomers. In another embodiment, the process for making modified PCT can eliminate from 0.8kg to 1.19kg, or more CO₂ emissions for every kilogram of modified PCT made with the inventive process, as compared to a process that makes virgin PCT homopolymers from monomers. Additionally, there are energy savings/reduced carbon dioxide emissions when the ethylene glycol byproduct is recovered and is used instead of ordinary ethylene glycol in manufacturing.

Advantageously, a molding composition containing the modified polycyclohexane dimethylene terephthalate random copolymers can have a reduced CO₂ emissions index. The reduced CO₂ emissions index, as defined in this application, is the amount of CO₂, expressed in kg, that is saved when one (1) kg of a composition containing the modified polycyclohexane dimethylene terephthalate random copolymers is made, as compared to the amount of CO₂, expressed in kg, that is created when the composition is made with polycyclohexane dimethylene terephthalate that is derived from monomers.

[Generally, the compositions generally have a reduced CO₂ emissions index that is more than approximately 0.05kg, and can range from 0.05kg to1.8. The basis for this feature is discussed below. The difference between the amount of CO₂ that is created during ordinary processes for making virgin, monomer-derived PCT and the process for making 1 kg of the modified polycyclohexane dimethylene terephthalate random copolymers can range from 1.04kg to 1.99kg, or more suitably from 1.36kg to 1.75kg. It should be noted that this difference is based on calculations for the entire process that starts from crude oil to the monomers to the PCT versus scrap PET to oligomers to the modified PCT. In other words, the process for making 0.8kg of the modified polycyclohexane dimethylene terephthalate random copolymers creates 1.04to 1.99kilograms less CO₂ as compared to the process for making 1 kg of virgin PCT from crude oil. To determine the ranges of the reduced CO₂ emissions index for the compositions (which have the modified PCT random copolymers present, in an amount ranging from 5 to 90 wt.%), the CO₂ reduction index can be calculated by multiplying the lower amount of the polycyclohexane dimethylene terephthalate present in the composition, in percentage terms, with 1.04(0.05 x1.04=0.05) and the higher amount of the polycyclohexane dimethylene terephthalate times1.99. (0.90x 1.99=1.8).

These results can be derived and verified by using material and energy balance calculations (calculations that are well known in the chemical engineering art) and comparing the amount of energy used to make modified PCT random copolymers from PET and the amount of energy used to make PCT from terephthalic acid.

The modified PCT compositions are further described in the following illustrative examples in which all parts and percentages are by weight unless otherwise indicated.

### EXAMPLES

Table 1 lists the components used in the examples.

**Table 1.**

| Abbreviation | Description | Supplier |
|---|---|---|
| PET-r | Recycled poly(1,4-ethylene terephthalate) pellets | FuturaPolyesters |
| TPT | Titanium tetraisopropoxide | Dupont |
| CHDM | 1,4-cyclohexanedimethanol | Eastman |

### Synthesis of Modified PCT From Recycled PET. Pilot Plant Process.

A modified polycyclohexanedimethylene terephthalate copolymer was derived from a polyethylene terephthalate component at larger scale in a helicone reactor. The helicone reactor had a capacity of 40 liters and was equipped with a special design of twin opposing helical blades with 270 degree twist; constructed of 316 SS (stainless steel) with 16g polish finish. The blade speed could be varied from 1 to 65 rpm. The agitators were connected to a 7.5 HP Constant Torque Inverter Duty Motor, which operates at 230/460 VAC, 3 PH, and 60 Hz. These agitators provided excellent surface area for the polymer melt in order to build molecular weight. The helicone was also designed with an overhead condenser to condense the vapors in the glycolysis, transesterification (if any) and polymerization stages.

For the depolymerization stage, recycle PET pellets with 1,4-cyclohexanedimethanol (CHDM) (refer to Table 2 for the stoichiometry of each of three batches) were charged to the helicone reactor. Titanium tetraisopropoxide (TPT) catalyst, 4.6 ml (100 ppm as Ti), was also added to the reaction mix.

**Table 2.**

| | Batch 1 | | Batch 2 | | Batch 3 | |
|---|---|---|---|---|---|---|
| | Target | Actual | Target | Actual | Target | Actual |
| PET-r, Kg | 11.3 | 11.3 | 11.3 | 11.3 | 11.3 | 11.3 |
| CHDM, Kg | 10.2 | 11.9 | 11.9 | 10.3 | 14.5 | 14.5 |
| TPT Catalyst, mL | 4.7 | 4.7 | 4.7 | 4.7 | 4.7 | 4.7 |

The temperature of the heating oil (for the helicone) was set to 225°C. The temperature ramps and hold times for each stage of the process are listed in Table 3. The agitator speed was set at 67 % of maximum. The temperature was quickly increased to 275 °C. Both excess CHDM and the ethylene glycol generated from transesterification between PET and CHDM were evolved and collected in a separate condenser. The reaction was kept at 275°C for 30 minutes for removing maximum evolution of CHDM and ethylene glycol. The reaction mixture was quickly increased to 295°C and the polymerization stage started.

**Table 3.**

| | |
|---|---|
| Depolymerization Stage | 225 °C to 275 °C at 25 °C/min |
| Temperature Ramp | |
| Polymerization Stage Temperature | 295 °C |
| Cooling Water Temperature | During Depolymerization: 35°C |
| | During Polymerization: 55 °C |
| Vacuum Ramp Rate | 103 kPa to 0.133 kPa at 2.0 kPa/min (775 to 1 mm Hg at 15 mm Hg/min) |

The composition of PCT made by this route has been characterized by NMR Spectroscopy (Table 4).

**Table 4.**

| Sample | % mole PET | % mole PCT | % Wt. PET | %Wt. PCT |
|---|---|---|---|---|
| Batch 1 | 3.7 | 96.3 | 2.7 | 97.3 |
| Batch 2 | 0.3 | 99.7 | 0.2 | 99.8 |
| Batch3 | 1.4 | 98.6 | 1 | 99 |

For the polymerization stage, a vacuum was applied to the helicone reactor. The speed of the agitator was set to 60 % of max and the target amps of the motor were 3.5 amps. The system pressure was brought down to 0.066 kPa (0.5 Torr) by the vacuum blower. The reaction was carried out until the polymer mass reached its third build. The reaction was stopped after 15 minutes into the third build and the polymer was cast in blobs. The products were then allowed to dry and ground into pellets.

the pellets were submitted to differential scanning calorimetry (DSC) analysis for determination of melting and crystallization temperatures compared with the conventionally prepared (neat) commercial PCT purchased from Eastman (Table 4). The results in Table 5 demonstrate that the modified PCT derived from recycled PET has a melting temperature and a crystallization temperature similar to the conventionally prepared commercial PCT, thus making modified PCT attractive for applications such as lead free soldering, medical, food and automotive applications.

**Table 5.**

| Polymer | Tm, °C | Tc, °C |
|---|---|---|
| Batch 1 | 280 | 235 |
| Batch 2 | 288 | 250 |
| Batch 3 | 285 | 245 |
| Commercial PCT | 295 | 260 |

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composition formed by a process comprising heating at a first temperature under an inert atmosphere and at a first pressure of at least 101 kPa a cyclohexanedimethanol and a polyethylene terephthalate component selected from the group consisting of polyethylene terephthalate and polyethylene terephthalate copolymers, to form a molten mixture comprising a component selected from the group consisting of oligomers containing ethylene terephthalate groups, oligomers containing ethylene isophthalate groups, oligomers containing diethylene glycol terephthalate groups, oligomers containing diethylene glycol isophthalate groups, oligomers containing cyclohexanedimethylene terephthalate groups, oligomers containing cyclohexanedimethylene isophthalate groups, covalently bonded oligomeric moieties containing at least two of the foregoing groups, cyclohexanedimethanol, ethylene glycol, and combinations thereof; and
heating the molten mixture with agitation at a second temperature higher than the first temperature and a second, subatmospheric pressure for a time and under conditions effective to form a modified polycyclohexanedimethylene terephthalate copolymer comprising at least one residue derived from the polyethylene terephthalate component;
wherein the modified polycyclohexanedimethylene terephthalate copolymer comprises 95 to 99.8 mole % cyclohexanedimethanol groups, based on 100 mole % of diol groups in the modified polycyclohexanedimethylene terephthalate copolymer;
wherein the modified polycyclohexanedimethylene terephthalate copolymer has an intrinsic viscosity of at least 0.4 to 1.2 dL/g, measured in a solution of 60 wt.% phenol and 40 wt.% 1,1,2,2-tetrachloroethane at 25 °C.

2. The composition of claim 1, wherein the at least one residue derived from the polyethylene terephthalate component comprises mixtures of ethylene glycol groups and diethylene glycol groups.

3. The composition of any of claims 1-2, wherein the at least one residue derived from the polyethylene terephthalate component is selected from the group consisting of ethylene glycol groups, diethylene glycol groups, isophthalic acid groups, and combinations thereof.

4. The composition of any of claims 1-3, wherein the at least one residue derived from polyethylene terephthalate component includes ethylene glycol, diethylene glycol, cobalt-containing compounds, antimony-containing compounds, isophthalic acid groups, or combinations thereof.

5. The composition of any of claims 1-4, further comprising ethylene glycol in an amount greater than 0 wt.% and less than 5 wt. %, based on the total weight of the copolymer.

6. The composition of any of claims 1-5, further comprising an inorganic residue selected from the group consisting of antimony-containing compounds, germanium-containing compounds, titanium-containing compounds, cobalt-containing compounds, tin-containing compounds, aluminum-containing compounds, aluminum, aluminum salts, alkaline earth metal salts, alkali salts, including calcium, magnesium, sodium and potassium salts, phosphorous-containing compounds and anions, sulfur-containing compounds and anions, and combinations thereof, in an amount from 250 to 1000 ppm of the composition.

7. The composition of any of claims 1-6, wherein the composition has crystallization temperature of 225 °C to 255 °C, measured in accordance with ASTM D3418.

8. The composition of any of claims 1-7, wherein the composition has a melting temperature of 280 °C to 294 °C, measured in accordance with ASTM E1358.

9. The composition of any of claims 1-8, wherein the composition has a molecular weight of 10,000 to 40,000 g/mol.

10. The composition of any of claims 1-9, wherein the composition has a reduced CO₂ emissions index of 0.05 to 1.8 kg.

11. The composition of any of claims 1-10, wherein the first temperature is 210 °C to 280 °C and/or the second temperature is 280 °C to 310 °C.

12. The composition of any of claims 1-11, wherein the cyclohexanedimethanol is in a 1.05 to 2 molar excess based on the moles of polyethylene terephthalate repeating unit in the polyethylene component.

13. A composition formed by subjecting the composition of any of claims 1-12 to solid state polymerization.

14. An article comprising the composition of any of claims 1-13.

15. The article of claim 14, wherein the article is an extruded or injection molded article.
